# EUROPÄISCHE PATENTSCHRIFT

(11) **EP 1 338 459 B1**
(45) Veröffentlichungstag und Bekanntmachung des Hinweises auf die Patenterteilung: **26.10.2005**
(21) Anmeldenummer: 03003885.5
(22) Anmeldetag: 21.02.2003
(51) Int. Cl.: B60K 23/04, B60K 23/08

(54) **Vorrichtung zur selbsttätigen Ansteuerung einer Differentialsperre**
Differential lock control system
Système de commande du blocage du différentiel

(30) Priorität: 26.02.2002 DE 10208239
(43) Veröffentlichungstag der Anmeldung: 27.08.2003
(73) Patentinhaber: ZF FRIEDRICHSHAFEN AG, 88038 Friedrichshafen (DE)
(72) Erfinder: Frühwirth, Gerhard, 4274 Schönau (DE)

(56) Entgegenhaltungen:
- EP-A- 0 438 178
- EP-A- 0 911 205
- US-A- 5 332 059
- US-A- 6 001 041
- PATENT ABSTRACTS OF JAPAN vol. 2000, no. 05, 14. September 2000 (2000-09-14) & JP 2000 062494 A (ISEKI &CO LTD), 29. Februar 2000 (2000-02-29)

## Beschreibung

Die Erfindung betrifft eine Vorrichtung zur selbsttätigen Ansteuerung einer Differentialsperre im Antriebsstrang eines Kraftfahrzeugs mit den Merkmalen des Oberbegriffs des Anspruchs 1.

Sperrkupplungen in Achsdifferentialen werden bisher nur selbsttätig aktiviert, wenn Schlupf gemessen wurde.

Aus der DE 197 49 919 A1 ist ein Verfahren bekannt zur selbsttätigen Sperrung von Differentialen eines allradgetriebenen Fahrzeugs. Sensoren bilden Impulse entsprechend der jeweiligen Drehung von Wellen des Differentials und, um den Einfluß des Lenkrollradius zu berücksichtigen, wird die Änderung des Lenkwertes ermittelt. Die Impulse entsprechend der jeweiligen Drehung der Wellen des Differentials und entsprechend der Änderung des Lenkwinkelwertes werden einer Vorrichtung zur Ansteuerung einer Differentialsperre zugeführt, die bei Schlupf die Differentialsperre aktiviert.

Bekannt ist aus der Beschreibungseinleitung der EP 0 510 457 eine formschlüssige Kupplung für Verteiler- und Ausgleichs-getriebe, die u. a. vor Erreichen von schwierigem Gelände vom Fahrer des Fahrzeugs von Hand einzulegen ist. Wenn die Kupplung eingerückt ist, sind die jeweiligen Antriebsstränge starr verbunden, und Ausrücken muß gegen die Reibung zwischen den durch das übertragene Moment gegeneinander gepreßten Kupplungsflächen erfolgen. Formschlüssige Kupplungen gemäß der EP 0 510 457 werden selbsttätig ausgerückt und bei Überschreiten von Drehzahldifferenzschwellen eingerückt.

Die DE 44 27 040 C2 offenbart zur Vermeidung von zu spätem Einrücken und zu häufigem Lösen und Wiedereinrücken einer als Differentialsperre wirkenden Sperrkupplung in einer Antriebsachse eines Kraftfahrzeugs in schwerem Gelände oder bei Winterbetrieb ein Verfahren zur Steuerung der als Differentialsperre wirkenden Sperrkupplung, wobei das Steuersignal für eine zeitlich begrenzte Betätigung der Sperrkupplung aus den Drehzahldifferenzen zwischen den Rädern der Antriebsachse durch Bildung einer Querschlupfsumme abgeleitet wird. Die Steuerung der Beaufschlagungszeit erfolgt gemäß der DE 44 27 040 C2 in Abhängigkeit von weiteren Signalen, wie Zustand des Kupplungspedals, Lenkwinkel, Motorleistung und Massenträgheitsmomenten, bei nur kurzzeitiger Beaufschlagung und praktischen und zutreffenden Ausrückkriterien für die erwähnten Fahrzustände in einfacher Weise. Nachteilig bei dem oben genannten Stand der Technik ist es, daß die Sperrkupplungen meist länger eingelegt sind als der Ansteuerung entsprechen würde, weil sich die Sperrkupplungen unter Verspannung nicht öffnen können. Zudem kann kein Schlupf mehr ermittelt werden, wenn alle Sperrkupplungen eingelegt sind und somit kommt es auch zu keinen weiteren Ansteuerungen der Sperrkupplungen. Durch Unebenheiten, Wegunterschiede der Räder, Schläge, Schaltvorgänge können die Sperrkupplungen wieder aufgehen, wodurch es in extrem steilem Gelände, z. B. bei geöffnetem Allradantrieb, zu instabilen Fahrzuständen kommen kann. Auf Grund des dann auftretenden Schlupfes werden die aufgegangenen Sperrkupplungen zwar wieder geschlossen, aber das Fahrzeug stabilisiert sich erst wieder nach einer gewissen Zeit.

Die gattungsbildende US -A-6,001,041 offenbart eine Vorrichtung zur selbsttätigen Ansteuerung einer Differentialsperre eines allradgetriebenen Fahrzeugs, welche einen Steigungssensor aufweist, mit dem Signale entsprechend der Steigung des Geländes, in dem das Fahzeug fährt, gebildet werden, und als Einflußgrößen für das Verhalten der Steuerung der Sperrkupplung des Differentials mit herangezogen werden.

Die EP-A-0 911 205 offenbart eine Vorrichtung zur Ansteuerung einer Differentialsperre eines Allradfahrzeugs, bei welcher die Differentialsperre in Abhängigkeit von Signalen, beispielsweise eines Bremspedals, angesteuert werden.

Die EP-A-0 438 178 offenbart eine Vorrichtung zur Ansteuerung mindestens einer Differentialsperre eines Allradfahrzeugs, wobei die Differentialsperre Differenzdrehzahlen zwischen den Vorderrädern und den Hinterrädern zuläßt oder verhindert, wobei Sensoren der Steuerung Signale zuführen, welche als Einflußgrößen für das Verhalten der Steuerung der Sperrkupplung de Differentials mit herangezogen werden.

Aufgabe der Erfindung ist es, eine Vorrichtung zur selbsttätigen Ansteuerung von mindestens einer Differentialsperre im Antriebsstrang eines Fahrzeugs, insbesondere einer Differentialsperre im Antriebsstrang eines allradgetriebenen Fahrzeugs, zu schaffen, mit der auch in schwierigem Gelände verbesserte Fahrstabilität erreicht und das Risiko des "Hängenbleibens" reduziert werden kann.

Die Lösung erfolgt mit einer Vorrichtung zur selbsttätigen Ansteuerung von mindestens einer Differentialsperre im Antriebsstrang eines Fahrzeugs, insbesondere einer Differentialsperre im Antriebsstrang eines allradgetriebenen Fahrzeugs, mit den Merkmalen des Anspruchs 1.

Gemäß der Erfindung weist eine Vorrichtung zur selbsttätigen Ansteuerung von mindestens einer Differentialsperre im Antriebsstrang eines Fahrzeugs, insbesondere einer Differentialsperre im Antriebsstrang eines allradgetriebenen Fahrzeugs, Sensoren auf, die Impulse entsprechend der jeweiligen Drehung von Wellen des Differentials bilden, und mindestens eine Steuervorrichtung, der diese Impulse zugeführt werden und die in Abhängigkeit von den Impulsen eine Sperrkupplung des Differentials steuert. Mindestens ein Neigungssensor ist vorgesehen, mit dem ein Signal entsprechend der Neigung des Geländes, in dem das Fahrzeug fährt, gebildet und der Steuervorrichtung zugeführt werden und als Einflußgrößen für das Verhalten der Steuerung der Sperrkupplung des Differentials mit herangezogen werden. Erfindungsgemäß kann mit den zusätzlichen Informationen über Steigung und auch über Seitenneigung bei extremen Geländefahrten das Verhalten, insbesondere die Stabilität des Fahrzeugs verbessert und die Unterbrechung der Antriebskraft durch ungewolltes Öffnen der Differentialsperren verhindert werden, indem die Steigung und Neigung des Geländes, in dem das Fahrzeug fährt, als Einflußgröße für die selbsttätige Ansteuerung von mindestens einer Differentialsperre im Antriebsstrang des Fahrzeugs berücksichtigt und so das Risiko des "Hängenbleibens" reduziert wird. In schwierigem Gelände treten häufig sehr kleine Geschwindigkeiten unter 2 km/h auf, die meist nicht meßbar sind, insbesondere dann, wenn diese über ABS-Elektroniken über CAN gesendet werden. Erfindungsgemäß kann das Zuschalten einer Längsausgleichsperre ausschließlich aufgrund der Steigung vorteilhaft erfolgen, da z. B. auf Testgeländen mit Steigungen bis zu 110% sich Schlupfsteuerung als allein nicht ausreichend heraus gestellt hat. Die erfindungsgemäße Vorrichtung zur selbsttätigen Ansteuerung von mindestens einer Differentialsperre im Antriebsstrang eines Fahrzeugs mit zusätzlicher Sensorik zur Schlupfsteuerung ist geeignet zu Akzeptanz bei Kunden zu führen, die bei Testfahrten nur mit Schlupfsteuerung nicht erreicht werden konnten.

Gemäß einer bevorzugten Ausgestaltung der Erfindung sind die Sensoren zur Erfassung der jeweiligen. Drehung von Wellen des Differentials als Radsensoren ausgebildet.

Gemäß einer weiteren bevorzugten Ausgestaltung der Erfindung sind weitere Sensoren als Lenkwinkelsensoren ausgebildet.

Gemäß einer weiteren bevorzugten Ausgestaltung der Erfindung sind die Steigungs- und/oder Neigungssensoren, mit denen die Impulse entsprechend der Neigung Längs und Quer des Fahrzeugs bestimmt werden, als Beschleunigungssensoren ausgebildet.

Gemäß einer weiteren bevorzugten Ausgestaltung der Erfindung ist die Differentialsperre formschlüssig ausgebildet.

Gemäß einer weiteren bevorzugten Ausgestaltung der Erfindung sind Längs- und Querdifferentialsperren im Antriebsstrang des Fahrzeugs vorgesehen.

Gemäß einer weiteren bevorzugten Ausgestaltung der Erfindung ist der Antriebsstrang des Fahrzeugs mit ABS ausgestattet, dessen Sensoren zur Erfassung von Radgeschwindigkeiten zur Bildung von Signalen entsprechend der jeweiligen Drehung von Wellen des Differentials herangezogen werden.

Gemäß einer weiteren bevorzugten Ausgestaltung der Erfindung ist die Steuervorrichtung so ausgebildet, daß die Differentialsperren abhängig von der Geschwindigkeit und der Steigung und Neigung des Fahrzeugs gesteuert werden kann, indem vorzugsweise bei kleinen Geschwindigkeiten bis ca. 15 km/h in Steigungen ab ca. 50% ohne Schlupf eine Längsausgleichsperre oder ein zuschaltbarer Allrad eingeschaltet wird oder nach einem Zuschalten des Allrads wegen Schlupf das Ausschalten solange verhindert wird, bis vom Fahrzeug eine vorbestimmte Steigung unterschritten wurde.

Gemäß einer weiteren bevorzugten Ausgestaltung der Erfindung ist das Fahrzeug ein Radpanzer.

Die Erfindung wird im folgenden anhand eines Ausführungsbeispiels dargestellt.

Eine Vorrichtung zur selbsttätigen Ansteuerung einer Differentialsperre im Antriebsstrang eines allradgetriebenen Fahrzeugs ist mit Sensoren ausgestattet, die Impulse entsprechend der jeweiligen Drehung von Wellen des Differentials bilden. Eine Steuervorrichtung, der diese Impulse zugeführt werden, steuert in Abhängigkeit von den Impulsen eine Sperrkupplung des Differentials.

Mindestens ein Steigungs- und Neigungssensor ist am Fahrzeug vorgesehen, mit dem Signale entsprechend der Steigung und Neigung des Geländes, in dem das Fahrzeug fährt, gebildet und der Steuervorrichtung zugeführt werden. Die Steuervorrichtung zieht diese Signale der Steigung und Neigung des Geländes als Einflußgrößen für das Verhalten der Steuerung der Sperrkupplung des Differentials mit heran.

Das Vorhandensein eines Lenkwinkelsensors ist nicht zwingend, da bei Fahrzeugen, welche nicht alle Differentialsperren aufweisen, das Signal des Lenkwinkels auch berechnet werden kann.

## Patentansprüche

1. Vorrichtung zur selbsttätigen Ansteuerung von mindestens einer Differentialsperre im Antriebsstrang eines Fahrzeugs, insbesondere einer Differentialsperre im Antriebsstrang eines allradgetriebenen Fahrzeugs, mit Sensoren, die Impulse entsprechend der jeweiligen Drehung von Wellen des Differentials bilden, und mindestens einer Steuervorrichtung, der diese Impulse zugeführt werden und die in Abhängigkeit von den Impulsen eine Sperrkupplung des Differentials steuert, **dadurch gekennzeichnet, dass** mindestens ein Neigungssensor vorgesehen ist, mit dem Signale entsprechend der Neigung des Geländes, in dem das Fahrzeug fährt, gebildet und der Steuervorrichtung zugeführt werden und als Einflußgrößen für das Verhalten der Steuerung der Sperrkupplung des Differentials mit herangezogen werden.

2. Vorrichtung gemäß Anspruch 1, **dadurch gekennzeichnet, dass** die Sensoren als Radsensoren ausgebildet sind.

3. Vorrichtung gemäß Anspruch 1, **dadurch gekennzeichnet, dass** weitere Sensoren als Lenkwinkelsensoren ausgebildet sind.

4. Vorrichtung gemäß Anspruch 1, **dadurch gekennzeichnet, dass** Steigungs- und/oder Neigungssensoren, mit denen Signale entsprechend der Neigung Längs und Quer des Fahrzeugs gebildet werden, als Beschleunigungssensoren ausgebildet sind.

5. Vorrichtung gemäß Anspruch 1, **dadurch gekennzeichnet, dass** die Differentialsperre formschlüssig ausgebildet ist.

6. Vorrichtung gemäß Anspruch 1, **dadurch gekennzeichnet, dass** Längs- und Querdifferentialsperren vorgesehen sind.

7. Vorrichtung gemäß Anspruch 1, **dadurch gekennzeichnet, dass** der Antriebsstrang des Fahrzeugs mit ABS ausgestattet ist.

8. Vorrichtung gemäß Anspruch 1, **dadurch gekennzeichnet, dass** die Steuervorrichtung so ausgebildet ist, daß die Differentialsperren abhängig von der Geschwindigkeit und der Steigung und Neigung des Fahrzeugs gesteuert werden.

9. Vorrichtung gemäß Anspruch 1, **dadurch gekennzeichnet, dass** das Fahrzeug ein Radpanzer ist.

10. Vorrichtung gemäß Anspruch 1, **dadurch gekennzeichnet, dass** der Wert des Lenkwinkels berechnet wird.

## Claims

1. A device for automatically activating at least one differential lock in the drive train of a vehicle, particularly a differential lock in the drive train of an all-wheel-drive vehicle, having sensors which produce impulses according to the particular rotation of shafts of the differential, and at least one control device, to which these impulses are supplied and which controls a lock clutch of the differential as a function of the impulses, **characterised in that** at least one slope sensor is provided, by means of which signals are produced according to the slope of the terrain on which the vehicle is travelling and are supplied to the control device and used as influencing variables for the behaviour of the control of the lock clutch of the differential.

2. A device according to Claim 1, **characterised in that** the sensors are constructed as wheel sensors.

3. A device according to Claim 1, **characterised in that** further sensors are constructed as steering-angle sensors.

4. A device according to Claim 1, **characterised in that** incline and/or slope sensors, by means of which signals are produced according to the slope longitudinally and transversely to the vehicle, are constructed as acceleration sensors.

5. A device according to Claim 1, **characterised in that** the differential lock is constructed for positive engagement.

6. A device according to Claim 1, **characterised in that** longitudinal and transverse differential locks are provided.

7. A device according to Claim 1, **characterised in that** the drive train of the vehicle is fitted with ABS.

8. A device according to Claim 1, characterise in that the control device is constructed such that the differential locks are controlled as a function of the speed and the incline and slope of the vehicle.

9. A device according to Claim 1, **characterised in that** the vehicle is a wheeled armoured vehicle.

10. A device according to Claim 1, **characterised in that** the value of the steering angle is calculated.

## Revendications

1. Dispositif de contrôle automatique d'au moins un dispositif de verrouillage différentiel dans la chaîne cinématique d'un véhicule, plus particulièrement d'un dispositif de verrouillage différentiel dans la chaîne cinématique d'un véhicule à quatre roues motrices, avec des capteurs qui génèrent des impulsions en fonction de la rotation des arbres du différentiel et au moins un dispositif de contrôle vers lequel ces impulsions sont acheminées et qui contrôle, en fonction des impulsions, un embrayage de verrouillage du différentiel, **caractérisé en ce que** au moins un capteur d'inclinaison est prévu, avec lequel des signaux sont générés en fonction de l'inclinaison du terrain sur lequel se déplace le véhicule et acheminés vers le dispositif de contrôle et utilisés en tant que valeurs d'influence pour le comportement du contrôle de l'embrayage de verrouillage du différentiel.

2. Dispositif selon la revendication 1, **caractérisé en ce que** les capteurs sont conçus comme des capteurs de roues.

3. Dispositif selon la revendication 1, **caractérisé en ce que** des capteurs supplémentaires sont conçus comme des capteurs d'angle de direction.

4. Dispositif selon la revendication 1, **caractérisé en ce que** des capteurs de montée et/ou des capteurs d'inclinaison, avec lesquels des signaux sont générés en fonction de l'inclinaison le long et en travers du véhicule, sont conçus comme des capteurs d'accélération.

5. Dispositif selon la revendication 1, **caractérisé en ce que** le dispositif de verrouillage du différentiel est conçu avec une complémentarité de forme.

6. Dispositif selon la revendication 1, **caractérisé en ce qu**'un dispositif de verrouillage de différentiel longitudinal et un dispositif de verrouillage de différentiel transversal sont prévus.

7. Dispositif selon la revendication 1, **caractérisé en ce que** la chaîne cinématique du véhicule est équipée de l'ABS.

8. Dispositif selon la revendication 1, **caractérisé en ce que** le dispositif de contrôle est conçu de telle sorte que les dispositifs de verrouillage sont contrôlés en fonction de la vitesse et de la montée et de l'inclinaison du véhicule.

9. Dispositif selon la revendication 1, **caractérisé en ce que** le véhicule est un blindé à roues.

10. Dispositif selon la revendication 1, **caractérisé en ce que** la valeur de l'angle de direction est calculée.
